# EUROPEAN PATENT APPLICATION

(11) **EP 1 480 429 A1**
(43) Date of publication of application: **24.11.2004**
(21) Application number: 03291190.1
(22) Date of filing: 20.05.2003
(51) Int. Cl.: H04M 3/51, H04M 3/493

(54) **Vocal assistant to provide predefined text messages to a call using text-to-speech converter**

(71) Applicant: Hewlett-Packard Development Company, L.P., Houston, TX 77070 (US)
(72) Inventor: Allegre, Jean-Pierre, 38330 Biviers (FR)
(74) Representative: Lloyd, Richard Graham

(57) **Abstract**

People having impaired speech cannot use standard telephones (102) to communicate in the normal way as they can listen to the call but not use their voice to answer. A system (100) is disclosed, which uses prestored text phrases which will be presented to the call using a text-to-speech converter (110). The user calls a service (106) in a telecommunication network and after an authentication he dials codes on the keypad on the telephone to provide prestored messages. The user also can use a translating engine to provide his text phrases in different languages.

## Description

The present invention relates to telephone-based services, and more particularly to telephone-based services which may be particularly adapted for people who have difficulty with vocal communication.

The use of the standard telephone by those hard of hearing or having impaired speech has long been problematic. Devices such as the text telephone (TTY), for example, do, however, enable such people to send text messages to other compatible devices and often provide a vital line of communication, for example, to emergency services, doctors, public services and so on. When away from the home other solutions are required and now the use of mobile telephones among those hard of hearing or with impaired speech is widespread. This is due largely to the short message services (SMS) which enable people to communicate with one another using short text messages.

However there exist many situations where those having difficulty with vocal communication may experience difficulty in communicating, rendering the most mundane tasks involving basic human contact both difficult and frustrating. Difficulty in vocal communication may, for example, arise through disability or may equally occur in foreign language situations by those not speaking a foreign language.

One aim of the present invention is to alleviate at least some of the above-mentioned problems.

According to a first embodiment of the present invention, there is provided a network-based system for supplying a user selectable message to a telephone call, comprising: a data store for storing one or more predeterminable textual messages; a user interface for selecting one or more of the stored messages; and a converter for converting the selected textual messages to spoken messages and for delivering the spoken messages to the call.

Advantageously, the user is able to adapt the system to individual needs and to have any pre-stored message spoken to another person using standard mobile or fixed telephones. Furthermore, the message may be additionally translated into any language.

The user interface may be accessible via a telephone connected to the call. The user interface may also be accessible from a user terminal via the Internet.

The data store may, for example, be accessible from a user terminal, such as an Internet browser, over the Internet.

Preferably an identifier associated with the telephone is retrieved and is used for selecting a data store associated with the identifier.

Alternatively, the user interface may be adapted to accept an account identification number sent from the telephone and for selecting a data store associated with the account identification number.

Suitably, each textual message may be assigned a numerical identifier. Each textual message may additionally be assigned a category identifier.

The converter is preferably a text-to-speech (TTS) converter.

In a further embodiment the selected message or messages may be translated into a different language using a language translation engine.

According to a second embodiment, there is provided a method of providing, in a network, user selectable messages to a telephone call, comprising receiving an indication of the identity of one or more pre-determinable textual messages stored in a data store; retrieving the identified messages from the data store; converting the retrieved textual messages into spoken messages; and supplying the spoken messages to the call.

The method may be adapted to receive the identity of the messages from a telephone connected to the call. The method may also be adapted to receive the identity of the messages from a user terminal via the Internet.

The method may allow access to the data store from a user terminal over the Internet.

Preferably an identifier associated with the telephone is retrieved and is used for selecting a data store associated with the retrieved caller identification. Alternatively, the user interface may accept an account identification number sent from the telephone for selecting a data store associated with the account identification number.

Suitably the textual messages may be stored in the data store along with a numerical identifier. Additionally a numerical category identifier may also be used.

Preferably a text-to-speech (TTS) converter is used to convert the textual messages to speech.

In a further embodiment the selected messages may be translated into a different language using a language translation engine.

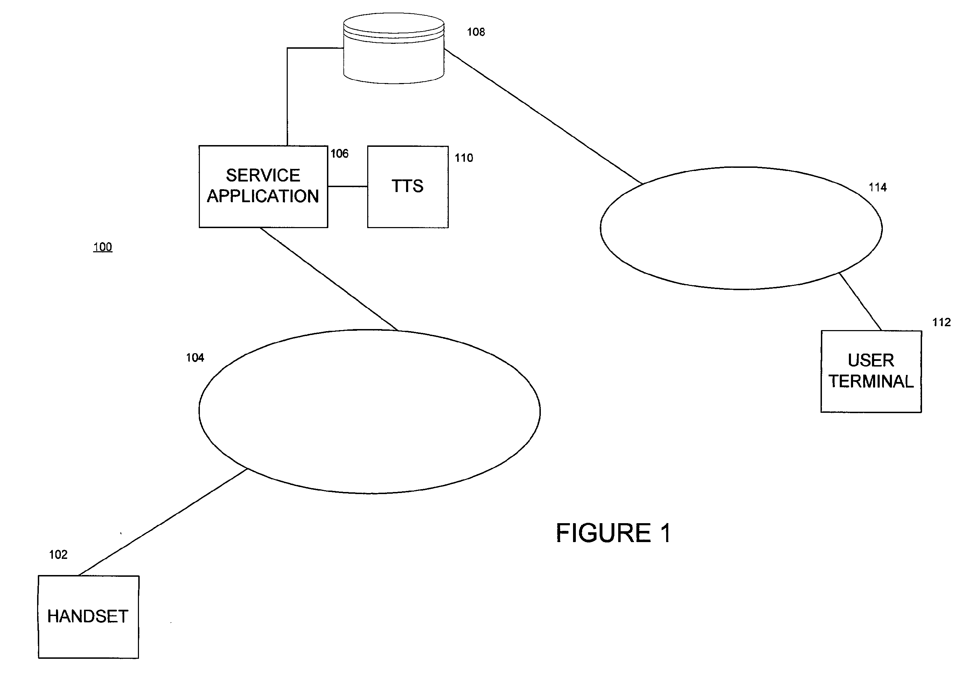

The invention will now be described, by way of non-limiting example, with reference to the accompanying diagram, in which Figure 1 is a block diagram showing an overview of an embodiment according to the present invention.

Figure 1 is a block diagram showing an overview of a system according to an embodiment of the present invention. The system includes a data store 108, such as a database, into which preconfigured text-based messages may be programmed by a user. Preferably each user has an individual account, for example, identified by the caller identification number or subscriber number of a given telephone or group of telephones. The database 108 may be accessible directly from a user terminal 112 via the Internet 114 using an appropriate web-based interface, or, for example, indirectly via a web-based interface provided by the service application 106 which itself manages the access to the database 108.

Using an appropriate user interface and access means the user may enter and manage one or more text-based messages, along with a numerical identifier for each message in the database 108. Alternatively, the messages may be preprogrammed by the service application operator either with or without the possibility for the user to change the messages.

The messages may, for example, relate to everyday situations such as:

| IDENTIFIER | MESSAGE |
|---|---|
| 1 | I would like some bread |
| 2 | Can you take me to the station |
| ... | ... |

The messages may also be arranged in the database in different categories for different situations. For example, one category may be for use in a bakers, another for use on a bus and so on. In this case, each category may additionally have its own numerical identifier.

For example:

| CATEGORY | MESSAGE ID | MESSAGE |
|---|---|---|
| 1 | 1 | I would like some bread |
| 1 | 2 | I would like some croissants |
| 1 | 3 | I would like some cakes |
| ... | ... | |
| 2 | 1 | I would like a ticket to the town centre |
| 2 | 2 | I would like a ticket to the railway station |
| ... | ... | |

The category and message identifiers may also make use of the letters associated with each number key on a standard telephone handset to ease identification of categories and/or messages. For example, the category relating to phrases for use in a bakers may be identified by the number '225', corresponding to the first three letters of the word 'bakers' as typed on a standard telephone handset.

When the user is in a situation where it is necessary to communicate one of the preprepared messages, the user makes a telephone call to a service application 106, via a telecommunications network 104. Such a network may, for example, be a public switched telephone network (PSTN), a mobile, voice over IP (VolP) or other suitable network. The service application 106 may, for example, be provided by a network operator or a third party operator, and may be located either inside the network 104 or, as illustrated, outside the network, for example, on a suitable media platform.

Once a call is connected to the service application 106, the service application 106 identifies the user, for example, by matching the caller party identity provided by the network 104 to the subscriber number of an existing account. The user could alternatively or additionally enter a personal identification number (PIN) and/or account information by sending appropriate dual-tone multi-frequency (DTMF) tones from the telephone handset to identify the user and/or the user account.

Once identification has been made, the user may request, for example using DTMF tones, one or more of the messages stored in the user account of the database 108 by using the numeric identifier of each message.

For example, the user may enter the sequence:
12*8*23# which would be interpreted by the service application 106: 'play message number 12, followed by message number 8 followed by message number 23'.

If different categories are used, the user may enter a sequence such as:
1#1*1#2#
which would be interpreted by the service application 106 as: 'play message number 1 from category 1, followed by message number 2 from category 1'.

The user may then hand the telephone handset to another person who presses, for example, the # key to listen to the messages. When the service application 106 detects that the # key has been pressed, the requested text messages are retrieved from the database 108 and are passed to a text-to-speech (TTS) engine 110. It will be appreciated that the database 108 may be co-located with the service application 106, or alternatively may be remotely located, for example, on the Internet or on part of another external network. The TTS engine 110 may be integral to the service application 106 or may be remotely located and accessed via a network, using for example, real-time protocol (RTP), as will be appreciated by those skilled in the art. The TTS engine 110 then 'speaks' the requested message or messages to the call thereby enabling the messages to be heard via the telephone handset 102.

In this way, a user can pre-program numerous messages into the database 108 in order to cater for any situation the user is likely to encounter. Through the simple interface for accessing and creating the messages, the user can easily use and adapt such a system for individual needs and any number of situations. Advantageously, such a service is accessible via any telephone handset which supports DTMF tone sending, and avoids the user to having to write down messages or rely on a third party to translate messages.

In further embodiments the user may cause one or more messages stored in the database 108 to be played during an established call to a third party. For example, in a further embodiment, the user terminal 112, has access to the service application 106 via an appropriate user interface as described above. The user places a call to the service application 106 using the telephone handset 102, for example using an appropriate audio conferencing or 3-party calling service, and additionally places a call to a third party which is joined to the call. The user, via the user terminal 112, is then able to select one or more of the messages stored in the database 108 and to cause the selected messages to be spoken to the call. Alternatively, the user could select the messages to be spoken via the telephone handset 102 as described above. As will be appreciated by those skilled in the art, any access to the service application 106 or database 108 is preferably secure and may require, for example, entering of password and account information.

Such a facility may be useful, for example, when making a reservation at a hotel or ordering a taxi, or the like. For example, the user pre-programs into the database 108 one or messages detailing the type of room required, the number of nights required and so on. Once a call to the hotel is connected in the manner described above, the user may select the required messages and have them spoken to the call so that the called party can hear the messages. This embodiment, for examples, enables a user to communicate in situations which may not have been previously possible.

Alternatively, the user may be able to pre-select messages from database 108 which are to be played to the call when the third party answers the call.

In a yet further embodiment, the concepts described above may be used in foreign language situations. For example, a user can pre-program in the database 108 a number of common phrases, as described above. Upon accessing the service application 106, the user may be requested to enter a language into which the messages are to be translated. Alternatively, the user may be able to pre-select, for example via the Internet browser 112, a default language in which to translate the messages. In this case, the service application makes use of a textual language translation tool (not shown) of which those skilled in the art will be aware of many suitable systems.

For example, the user may enter the sequence:
2#12*10#
which could mean 'translate into language 2 (e.g. French) message 12 followed by message 10'. The service application 106 would then retrieve messages 12 and 10, pass them to a suitable language translation engine, and pass the results to a suitable TTS engine.

Those skilled in the art will appreciate that the above-described Internet-based interface is just one example of how such the messages in the database 108 may be managed by a user. Other alternatives may include, for example, a wireless application protocol (WAP) based interface which would, advantageously, allow a user to pre-program the messages stored therein from a wireless location. In this case, it is possible that the handset 102 and the user terminal 112 be located in the same device.

## Claims

1. A network-based system for supplying a user selectable message to a telephone call, comprising:
a data store for storing one or more predeterminable textual messages;
a user interface for selecting one or more of the stored messages; and
a converter for converting the selected textual messages to spoken messages and for delivering the spoken messages to the call.

2. A system according to claim 1, wherein the user interface for selecting messages is accessible via a telephone connected to the call.

3. A system according to claim 1, wherein the user interface for selecting messages is accessible from a user terminal via the Internet.

4. A system according to claim 1 or 3, wherein the data store is accessible from a user terminal via the Internet.

5. A system according to any of claims 2 to 4, further comprising means for retrieving an identifier associated with the telephone and for selecting a data store based on the retrieved identifier.

6. A system according to any of claims 2 to 4, wherein the user interface is adapted to accept an account identification number sent from the telephone and for selecting a data store associated with the account identification number.

7. A system according to any preceding claim, wherein each textual message is assigned a numerical identifier.

8. A system according to claim any one of claims 1 to 7, wherein each textual message is additionally assigned a numerical category identifier.

9. A system according to any previous claim, wherein the converter is a text-to-speech (TTS) converter.

10. A system according to any previous claim, further comprising a translation engine for translating the selected message into a different language.

11. A system according to any previous claim, adapted for use with a mobile telephone.

12. A method of providing, in a network, user selectable messages to a telephone call, comprising
receiving an indication of the identity of one or more pre-determinable textual messages stored in a data store;
retrieving the identified messages from the data store;
converting the retrieved textual messages into spoken messages; and
supplying the spoken messages to the call.

13. A method according to claim 12, wherein the step of receiving the indication is adapted to receive the indication from a telephone connected to the call.

14. A method according to claim 12, wherein the step of receiving the indication is adapted to receive the indication from a user terminal via the Internet.

15. A method according to any of claims 12 to 14, further comprising accessing the data store from a user terminal via the Internet.

16. A method according to any of claims 13 to 15, further comprising retrieving an identifier associated with the telephone and selecting a data store associated with the retrieved identifier.

17. A method according to any of claims 13 to 15, further comprising accepting an account identification number from the telephone and selecting a data store associated with the account identification number.

18. A method according to any of claims 12 to 17, further comprising storing the textual messages in the data store along with a numerical identifier.

19. A method according to any of claims 12 to 18, further comprising storing the textual messages in the data store along with a numerical category identifier.

20. A method according to any of claims 12 to 19, wherein the step of converting the textual messages is performed using a text-to-speech (TTS) converter.

21. A method according to of claims 12 to 20, further comprising translating the selected message into a different language using a language translation engine.
